# EUROPÄISCHE PATENTSCHRIFT

(11) **EP 2 016 817 B1**
(45) Veröffentlichungstag und Bekanntmachung des Hinweises auf die Patenterteilung: **01.06.2016**
(21) Anmeldenummer: 08012082.7
(22) Anmeldetag: 04.07.2008
(51) Int. Cl.: A01B 63/10, A01B 63/112

(54) **Verfahren zum Ansteuern eines Hubwerks und Hubwerk**
Method for operating a hoisting gear and hoisting gear
Procédé de commande d'un dispositif de levage et dispositif de levage

(30) Priorität: 18.07.2007 DE 102007033841; 27.08.2007 DE 102007040345
(43) Veröffentlichungstag der Anmeldung: 21.01.2009
(73) Patentinhaber: Robert Bosch GmbH, 70184 Stuttgart (DE)
(72) Erfinder: Sönke, Jessen, Dr., 71732 Tamm (DE)
(74) Vertreter: Thürer, Andreas

(56) Entgegenhaltungen:
- EP-A- 1 403 102
- AT-U1- 8 986
- DE-A1-102004 033 315
- GB-B- 2 407 472
- US-B1- 6 230 817

## Beschreibung

Die Erfindung betrifft ein Verfahren zum Ansteuern eines Hubwerks und ein Hubwerk, mit dem dieses Verfahren durchführbar ist.

Moderne Traktoren übernehmen neben ihrer herkömmlichen Aufgabe als Zugmaschine auch die Energieversorgung und Steuerung von an ein Hubwerk angehängten oder aufgesattelten Geräten. Diese letztgenannte Funktion wird zum einen von einer Zapfwelle des Traktors oder von der Arbeitshydraulik wahrgenommen. Bei Traktoren der mittleren und oberen Leistungsklasse kommen bei der Arbeitshydraulik zunehmend elektrisch ansteuerbare Wegeventile für die Steuerung der Arbeitsfunktionen der Anbaugeräte zum Einsatz. Die Steuerung dieser hydraulischen Funktionen erfolgt üblicher Weise über einen sehr kompakten Steuerblock, bei dem die Steuerung mit allen wesentlichen Wege- und Regelventilen zu einer Einheit zusammengefasst ist. Ein derartiger, für die so genannte elektrohydraulische Hubwerksregelung (EHR) geeigneter Steuerblock ist beispielsweise in der DE 10 2004 033 315 A1 oder im Datenblatt RD 66 125/09.04 (EHR-Ventile) der Bosch Rexroth AG beschrieben.

Die bei bekannten Traktoren verwendeten Heckhubwerke haben am Traktorfahrgestell angelenkte Unterlenker, an deren Endabschnitte das Anbaugerät angesetzt wird. Die Verstellung der Unterlenker erfolgt über Hubzylinder, die über die EHR-Steuerblöcke verstellbar, sind. Zur Einstellung der Neigung des Anbaugerätes kann das Hubwerk zusätzlich mit einem hydraulisch verstellbarem Oberlenker versehen sein, dessen Länge ebenfalls hydraulisch verstellbar ist. Derartige Hubwerke sind beispielsweise in der DE 603 03 482 T2 oder der DE 103 50 651 B3 beschrieben.

Bei der letzt genannten Lösung werden im so genannten Teach-In-Verfahren die Solllängen des Oberlenkers bei der Verstellung des Hubwerks eingegeben und dann während der Hubwerksregelung geregelt, so dass der Oberlenker eine von der jeweiligen Hubwerksposition abhängige Solllänge einnimmt und das Anbaugerät somit beispielsweise im Steilaushub oder im Parallelaushub anhebbar oder in einer davon abweichenden Bahnkurve absenkbar ist. Es zeigte sich, dass eine derartige Längenregelung des Oberlenkers bei bestimmten Betriebsbedingungen nicht hinreichend ist. Zudem ist die Programmierung im Teach-In-Verfähren relativ aufwendig, wobei ein erheblicher Aufwand erforderlich ist, um die abgelegte Bahnkurve an leicht geänderte Betriebsbedingungen anzupassen.

Bei dem in der DE 603 03 482 T2 beschriebenen Hubwerk kann die Verstellung in Abhängigkeit vom Druck oder von der Länge des Oberlenkers erfolgen, wobei über Druckaufnehmer die Drücke in den Druckräumen eines zur Verstellung des Oberlenkers verwendeten Hydrozylinders und dessen Kolbenweg über geeignete Sensoren erfasst und über eine Steuereinheit ausgewertet werden. Bei dieser bekannten Lösung erfolgt auch die Verstellung der Unterlenker über eine Längen- und/oder Druckregelung, so dass sowohl der regelungstechnische als auch der vorrichtungstechnische Aufwand erheblich ist. Ein weiterer Nachteil dieser bekannten Lösung besteht darin, dass die Ansteuerung des Oberlenkers ebenfalls in Abhängigkeit von abgespeicherten Kennlinien erfolgt, bei denen für jede Hubwerkslage eine Solllänge des Oberlenkers abgelegt ist. Eine flexible, kurzfristige Anpassung an sich ändernde Betriebsbedingungen ist nicht möglich, da zuerst eine Kennlinie vergleichsweise aufwendig abgespeichert werden muss.

Demgegenüber liegt der Erfindung die Aufgabe zugrunde, ein Verfahren zur Ansteuerung eines Hubwerks und ein für ein derartiges Verfahren geeignetes Hubwerk zu schaffen, bei dem eine Anpassung an unterschiedliche Betriebszustände auf einfache Weise möglich ist.

Diese Aufgabe, wird hinsichtlich des Verfahrens durch die Merkmale des Patentanspruches 1 und hinsichtlich des Hubwerks durch die Merkmale des nebengeordneten Patentanspruches 18 gelöst.

Erfindungsgemäß werden Unterlenker eines Hubwerks über eine elektrohydraulische Hubwerksregelung (EHR) verstellt, während die Verstellung des Oberlenkers in Abhängigkeit vom Druck eines hydraulischen Antriebs zur Verstellung des Oberlenkers oder von der Länge des Oberlenkers erfolgt. Gemäß dem vorgestellten Bedienkonzept kann eine Bedienperson wahlweise die Art der Regelung manuell vorwählen oder die Regelungsart wird automatisch in Abhängigkeit von Betriebszuständen der Hubwerksregelung, der Oberlenkerregelung oder von der Lage des Oberlenkers eingestellt. Dadurch hat es die Bedienperson in der Hand, die Regelungsart an die jeweiligen Betriebszustände anzupassen, unter denen das Hubwerk betrieben wird, so dass eine sehr flexible Anpassung an unterschiedliche Anforderungen möglich ist, ohne dass es einer aufwendigen Programmierung von Kennlinien bedarf. Das erfindungsgemäße Bedienkonzept und das erfindungsgemäße Hubwerk mit einem Hubwerkregelkreis, einem Oberlenkerregelkreis mit einer Bahn- und einer Druckregelung sowie mit einem Bedienfeld zur Auswahl des Regelverfahrens (Druck- und/oder Längenregelung) ermöglichen somit eine äußerst komfortable und einfache Anpassung an unterschiedliche Einsatzbereiche eines angehängten oder aufgesattelten Geräts.

Der hydraulische Antrieb zur Verstellung des Oberlenkers ist vorzugsweise als Hydrozylinder ausgeführt.

Als Ausgangswert für die Längenregelung des Oberlenkers wird vorzugsweise die zuletzt von der Bedienperson manuell eingestellte Oberlenkerlänge verwendet, der eine bestimmte Hubwerkslage zugeordnet ist. Diese Referenzlänge des Oberlenkers wird vorzugsweise in einer vorbestimmten Hubwerksposition, beispielsweise bei abgesenktem Hubwerk eingestellt, so dass die Referenzlänge stets mit einer Hubwerksposition gekoppelt ist. Ausgehend von dieser Wertepaarung erfolgen dann die Bahnregelung des Hubwerks und die Längenregelung des Oberlenkers. Mit diesem Konzept wendet man sich vollständig von den herkömmlichen Lösungen ab, bei denen die Kennlinien stets im Teach-In-Verfahren aufwendig voreingestellt werden mussten. Gemäß dem erfindungsgemäßen Bedienkonzept ändert sich diese der Regelung zugrunde liegende Referenzlänge und -lage des Oberlenkers/Hubwerks nach jeder manuellen Einstellung, so dass sehr flexibel an unterschiedliche Arbeitsbedingungen angepasst werden kann.

Bei einer besonders komfortablen Lösung kann die Charakteristik der Druck- oder Längenregelung des Oberlenkers manuell von der Bedienperson an einem Bedienfeld verändert werden, so dass ein Anbaugerät beispielsweise steiler ausgehoben werden kann, als es in der Grundeinstellung der Fall ist. In dieser Grundeinstellung wird - vorzugsweise - stets von der oben erwähnten manuell eingestellten Referenzlänge ausgegangen. D.h. die Charakteristik der Regelung kann zum Einen durch manuelle Verstellung der Referenzlänge und zum Anderen durch manuelle Verstellung der Kennlinien am Bedienfeld beeinflusst werden.

Erfindungsgemäß wird es bevorzugt, wenn die Längen- oder Druckregelung des Oberlenkers nur bei aktiver Hubwerksregelung aktivierbar ist.

Zur Erhöhung der Betriebssicherheit kann während der Druckregelung des Oberlenkers nur eine Verstellung der Oberlenkerlänge innerhalb eines bestimmten Bereiches zugelassen werden.

Bei einem Ausführungsbeispiel des erfindungsgemäßen Bedienkonzeptes ist es vorgesehen, automatisch von Bahn- auf Druckregelung umzuschalten, wenn der Oberlenker seine Referenzlänge und das Hubwerk seine Regelsollwertlage erreicht hat.

Es kann des Weiteren vorgesehen werden, bei gewählter Druckregelung die Längenregelung des Oberlenkers so lange zu aktivieren bis die Referenzlänge eingestellt ist. Anschließend wird die Längenregelung des Oberlenkers abgestellt.

Bei einem weiteren Sicherheitskonzept ist es vorgesehen, bei einer Unterbrechung der elektrohydraulischen Hubwerksregelung oder einer Verriegelung der Hubwerksregelung keine automatische Veränderung der Oberlenkerlänge durchzuführen.

Die Transportsicherheit wird verbessert, wenn bei Überschreiten einer vorbestimmten Grenzfahrgeschwindigkeit eine ggf. eingestellte Druckregelung abgeschaltet wird und durch die Bedienperson lediglich manuell aktiviert werden kann.

Bei modernen Traktoren kann die Betätigung des Hubwerks über externe Taster, beispielsweise am Heck oder den Kotflügeln erfolgen. Bei Betätigung dieser Taster wird die Oberlenkerregelung automatisch abgeschaltet.

Falls in einer Transportstellung des Hubwerks eine externe Betätigung der elektrohydraulischen Hubwerksregelung erfolgt, wird der Oberlenker in seine voreingestellte Referenzlänge verstellt.

Sobald diese Referenzlänge erreicht ist, kann die Oberlenkerlänge nur manuell verstellt werden.

Bei einem Bedienkonzept erfolgt die Druckregelung für den Antrieb des Oberlenkers intermittierend, wobei der Antrieb des Oberlenkers während der Druckregelzyklen angehalten wird.

Bei diesem Bedienkonzept wird es bevorzugt, bei unbetätigtem Hydrozylinder den Druck in den Druckräumen zu erfassen und aus der Lastrichtung sowie dem erfassten Ist-Druck eine Soll-Zylinderlänge zu berechnen, bei der sich ein Solldruck einstellen müsste. Die Oberlenkerlänge wird anschließend auf diesen Wert eingestellt und dann nach Anhalten des Hydrozylinders wiederum der Druck in den Druckräumen gemessen und daraus eine neue Soll-Zylinderlänge ermittelt, wobei in diese Berechnung die zuvor ermittelte Soll-Zylinderlänge und der gemessene Ist-Druck eingehen. Dieser Zyklus wird wiederholt bis der gewünschte Soll-Druck am Hydrozylinder erreicht ist.

In dem Fall, in dem mehrere externe Betätigungselemente, beispielsweise Taster gleichzeitig betätigt werden, wird die Hubwerksregelung und die Oberlenkerregelung unterbrochen.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
Figur 1 eine Prinzipdarstellung einer Arbeitshydraulik eines Traktors;
Figur 2 einen Hydraulikschaltplan einer Oberlenkeranordnung des Traktors aus Figur 1;
Figur 3 ein Bedienfeld zur Ansteuerung des Oberlenkers;
Figur 4 ein stark vereinfachtes Ablaufdiagramm zur Erläuterung einer Bedienstrategie für den Oberlenker;
Figur 5 einen Hydraulikschaltplan eines weiteren Ausführungsbeispiels einer Oberlenkeranordnung und
Figur 6 ein Ablaufschema einer Bypass-Steuerung für die Oberlenkeranordnung aus Figur 5.

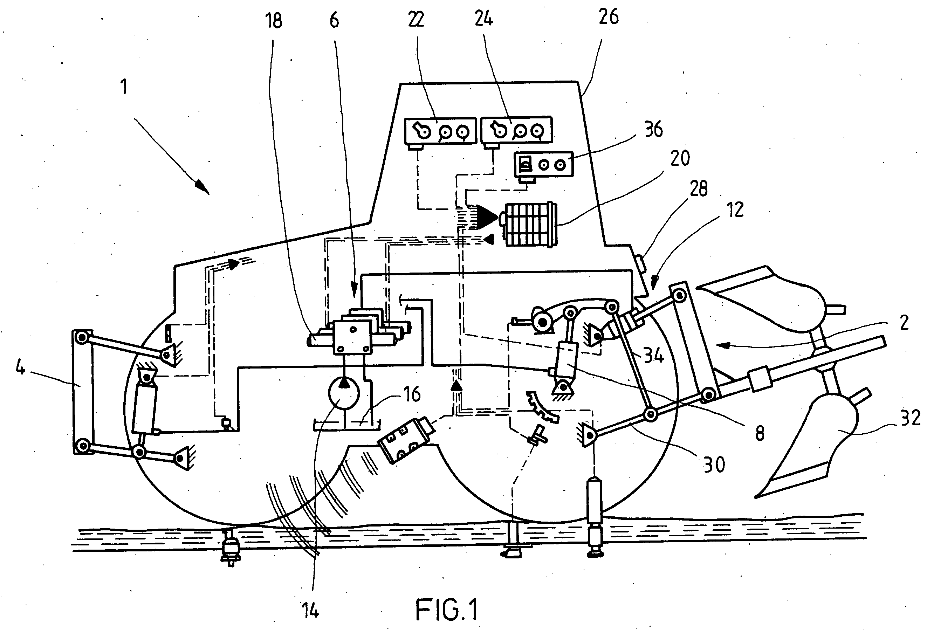

Anhand Figur 1 wird der Grundaufbau einer Arbeitshydraulik eines Traktors 1 erläutert. Dieser hat ein Heckhubwerk 2 und ggf. ein Fronthubwerk 4, die beide hydraulisch betätigt sind. Die Druckmittelversorgung erfolgt über einen Mobilsteuerblock der eingangs beschriebenen Bauart, über den Hubzylinder 8, 10 der beiden Hubwerke 2, 4 und ein Oberlenkerzylinder 12 mit einer Hydropumpe 14 oder einem Tank 16 verbindbar sind. Beim dargestellten Ausführungsbeispiel sind die beiden Hubzylinder 8, 10 einfach wirkend dargestellt, die bei Druckmittelzufuhr ausgefahren werden und aufgrund des Gewichts des Hubwerks und des Anbau-/Aufsattelgerätes wieder abgesenkt werden. Anstelle dieser einfach wirkenden Hubzylinder 8, 10 können selbstverständlich auch doppelt wirkende Hubzylinder verwendet werden, die auch im Arbeitsbereich "Drücken" betrieben werden können, bei denen beispielsweise ein aktives Pflugeinziehen ermöglicht ist. Dieser Betriebszustand kann zum Beispiel auch verwendet werden, um den Traktor zum Wechsel der hinteren, großen Räder rückseitig anzuheben.

Der Steuerblock 6 enthält jedem hydraulischen Verbraucher des Traktors zugeordnete Wegeventile 18, die über ein Steuergerät 20 ansteuerbar sind. Die Sollwerte zur Betätigung der Hubzylinder 8, 10 werden beispielsweise über ein Frontbedienteil 22 und ein Heckbedienteil 24 eingegeben, die im inneren der Traktorkabine 26 angeordnet sind oder über front- bzw. rückseitig am Traktor angeordnete Taster 28 eingestellt werden.

Zur Erfassung der auftretenden Kräfte, Drücke, Geschwindigkeiten und Hubwerkspositionen sind am Traktor 1 noch eine Vielzahl von Sensoren, beispielsweise Drucksensoren, Drehzahlsensoren, Lagesensoren, Kraftsensoren oder Geschwindigkeitssensoren vorgesehen, deren Signale über das Steuergerät 16 verarbeitet werden.

Die beiden Hubwerke 2, 4 sind in Figur 1 sehr vereinfacht dargestellt, hinsichtlich des konkreten konstruktiven Aufbaus derartiger Hubwerke sei zur Vermeidung von Wiederholungen auf den eingangs beschriebenen Stand der Technik verwiesen. Ein herkömmliches Heckhubwerk 2 hat üblicher Weise zwei Unterlenker 30, die jeweils einerseits am Traktorfahrgestell angelenkt sind und andererseits ein Anbaugerät, beispielsweise einen Pflug 32 abstützen. Die Betätigung der Unterlenker 30 zum Anheben und Absenken des Pflugs 32 erfolgt über den Hubzylinder 8, oder eine Hubzylinderanordnung, die direkt oder - wie beim dargestellten Ausführungsbeispiel gezeigt - über eine Hebelanordnung 34 an den Unterlenkern 30 angreifen. Der Anstellwinkel des Anbaugeräts oder Aufsattetgerätes wird über einen hydraulischen Oberlenker verstellt, der im Prinzip durch den doppeltwirkenden Oberlenkerzylinder 12 gebildet ist, dessen Kolbenstange am Anbaugerät - im vorliegenden Fall am Pflug 32 - angreift.

Die Verstellung der Unterlenker 30 mit Bezug zum Traktörfahrgestell erfolgt über einen Regelkreis, der allgemein als elektrohydraulische Hubwerksregelung bezeichnet wird und der im Wesentlichen aus den zur Verstellung der Unterlenker 30 erforderlichen Wegeventilen 18, dem Steuergerät 20, dem Hubzylinder 8 sowie Wegaufnehmern zur Erfassung der Unterlenkerposition besteht. Bei modernen Traktoren werden bei der elektrohydraulischen Hubwerksregelung auch die auftretenden Zugkräfte erfasst, die durch einen Kraftmessbolzen aufgenommen werden, der in die Anlenkung der Unterlenker 30 ans Fahrgestell eingesetzt ist.

Die Verstellung des hydraulischen Oberlenkers 12 erfolgt über einen Oberlenkerregelkreis mit dem zugeordneten Wegeventil 18, dem Steuergerät 20, Sensoren zur Aufnahme der Oberlenkerlänge und - wie im Folgenden noch näher erläutert - Sensoren zur Aufnahme der Drücke in den Druckräumen des hydraulischen Oberlenkers. Wie im Folgenden noch detaillierter erklärt wird, kann die Bedienperson eine manuelle Verstellung des Oberlenkers 12 oder eine Änderung der Regelcharakteristik über ein in der Traktorkabine 26 angeordnetes Bedienfeld 36 bewirken. Zusätzlich sind auch am Heck des Traktors Taster 28 zur Verstellung der Oberlenkerlänge vorgesehen.

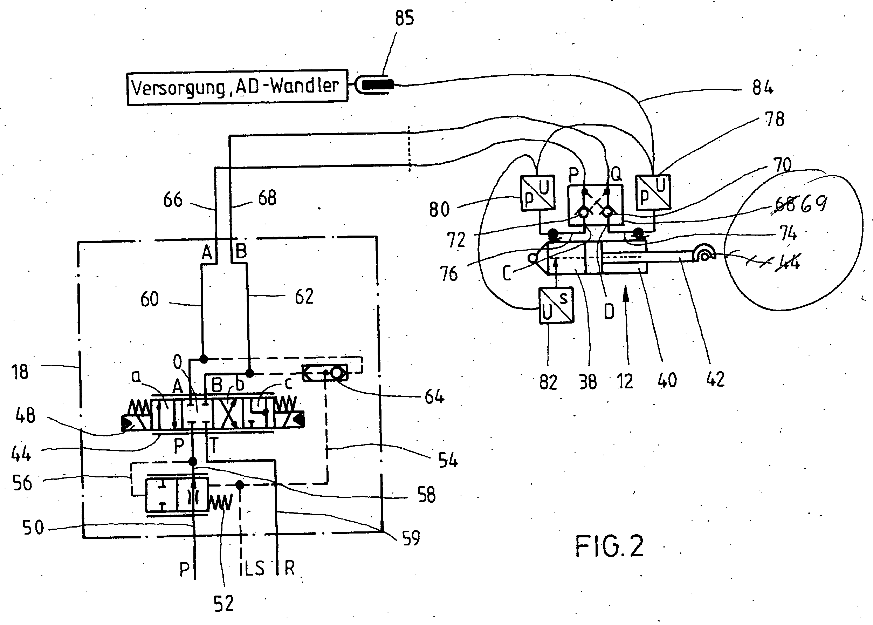

Hinsichtlich des konkreten Aufbaus einer elektrohydraulischen Hubwerksregelung zur Verstellung der Unterlenkerposition sei beispielhaft auf die eingangs genannte Patentanmeldung DE 10 2004 033 315 A1 oder auf die DE 10 2005 005 316 A1 verwiesen. Der Aufbau des Oberlenkerregelkreises zur Verstellung des hydraulischen Oberlenkers 12 wird anhand Figur 2 beschrieben. Diese zeigt einen Hydraulikschaltplan einer Schaltung, über die der hydraulische Oberlenker 12 über das Wegeventil 18 mit Druckmittel versorgbar ist, um die Oberlenkerlänge zu verstellen. Der hydraulische Oberlenker 12 ist praktisch als Hydrozylinder ausgeführt, dessen Kolben den Zylinder in einen Zylinderraum 38 und einen Ringraum 40 unterteilt. Eine Kolbenstange 42 ist an ihrem freien Endabschnitt mit einer Kupplung ausgeführt, an die das Anbau- oder Aufsattelgerät angesetzt wird. Die Druckmittelversorgung des Ober lenkers 12 erfolgt über das Wegeventil 18, das beim dargestellten Ausführungsbeispiel als vorgesteuertes, stetig verstellbares Wegeventil ausgeführt ist, wie es beispielsweise im Datenblatt RD 66 130/02.07 der Bosch Rexroth AG beschrieben ist.

Die in Figur 2 dargestellte Schaltung ist als LS-System ausgeführt. Bei derartigen LS-Systemen wird der Pumpendruck stets so eingestellt, dass er um eine vorbestimmte Druckdifferenz oberhalb des höchsten Lastdrucks der hydraulischen Verbraucher liegt. Hinsichtlich weiterer Einzelheiten derartiger LS-Systeme sei auf das genannte Datenblatt verwiesen. Prinzipiell bestehen derartige LS-Wegeventile aus einem vorgesteuerten Proportionalventil 44, dem eine LS-Druckwaage 46 zugeordnet ist. Beide Bauelemente sind üblicher Weise in eine Ventilscheibe eines Mobilsteuerblocks integriert. Bei dem dargestellten Ausführungsbeispiel erfolgt die Verstellung des Proportionalventils 44 elektrohydraulisch, beispielsweise über Druckreduzierventile 48, die über einen Proportionalmagneten verstellbar sind. Das Wegeventil 18 hat üblicher Weise einen an die Hydropumpe 14 angeschlossenen Druckanschluss P, einen LS-(Lastdruck)-Anschluss LS, einen mit dem Tank 16 verbundenen Rücklaufanschluss R sowie zwei Arbeitsanschlüsse A, B. Vom Druckanschluss P der Wegeventilscheibe führt ein Pumpenkanal 50 zum Eingangsanschluss der Druckwaage 46, die in Öffnungsrichtung von der Kraft einer Druckwaagenfeder 52 und dem Lastdruck am Oberlenker 12 beaufschlagt ist, wobei dieser Lastdruck über eine LS-Leitung 54 abgegriffen wird. Die Druckwaage 46 ist in Richtung einer Verringerung des Öffnungsquerschnitts durch den Druck am Ausgang der Druckwaage beaufschlagt, der über einen Steuerkanal 56 von einem den Ausgangsanschluss der Druckwaage 46 mit einem Eingangsanschluss P des Proportionalventils 44 verbindenden Zulaufkanal 58 abgegriffen ist.

Das Proportionalventil 44 ist über eine Zentrierfederanordnung in eine Sperrposition Null vorgespannt, in der der Druckanschluss P, ein Tankanschluss T und zwei Arbeitsanschlüsse A, B abgesperrt sind. Der Tankanschluss T ist über einen Ablaufkanal 59 mit dem Tankanschluss T verbunden. Durch Verstellen eines Ventilschiebers des Proportionalventils 44 in Richtung seiner Positionen a wird die Druckmittelverbindung zwischen dem Druckanschluss P und dem Arbeitsanschluss A sowie vom Arbeitsanschluss B zum Tankanschluss T aufgesteuert. Bei einer Verstellung in Richtung der mit b gekennzeichneten Positionen wird der Druckanschluss P mit dem Arbeitsanschluss B und entsprechend der Arbeitsanschluss A mit dem Tankanschluss T verbunden. Durch ein weiteres Verstellen des Ventilschiebers in der Darstellung gemäß Figur 2 nach links wird eine Schwimmstellung c eingestellt, bei der die beiden Arbeitsanschlüsse A, B gemeinsam mit dem Tankanschluss T verbunden sind, so dass der Oberlenker frei verstellbar ist. In dieser Schwimmstellung ist der Druckanschluss P abgesperrt.

Der Arbeitsanschluss A ist über eine Vorlaufleitung 60 mit dem Arbeitsanschluss A des Wegeventils 18 und der Arbeitsanschluss B des Proportionalventils 44 ist über einen Rücklaufanschluss 62 mit dem Arbeitsanschluss B der Wegeventilscheibe des Wegeventils 18 verbunden. Je nach Ansteuerung des Proportionalventils 44 kann selbstverständlich der Vorlaufkanal 60 auch als Rücklaufkanal 62 dienen.

Der die Druckwaage in Öffnungsrichtung beaufschlagende Lastdruck wird über ein Wechselventil 64 von den beiden Kanälen 60, 62 abgegriffen, die je nach Ansteuerung des Proportionalventils 44 im Druckmittelvorlauf oder im Druckmittelrücklauf liegen.

Durch Verstellung des Proportionalventils 44-wird eine Zulaufmessblende eingestellt, wobei über die Druckwaage 46 der Druckabfall über der Zulaufmessblende lastunabhängig konstant gehalten werden kann - dieser Druckabfall entspricht dem Druckäquivalent der Feder 52.

Die beiden Arbeitsanschlüsse A, B der Ventilscheibe sind über Arbeitsleitungen 66, 68 mit dem hydraulischen Oberlenker 12 verbunden. Beim dargestellten Ausführungsbeispiel ist dieser hydraulische Oberlenker 12 mit einem Sperrblock 69 mit zwei Sperrventilen 70, 72 ausgeführt, die vom jeweiligen Druck am Eingang des anderen Sperrventils 72, 70 entsperrbar sind. Der Sperrblock ist auf den Oberlenker 12 aufgesetzt, so das sich ein sehr kompakter Aufbau ergibt. Die beiden Arbeitsleitungen 66, 68 sind an die beiden Eingänge P, Q des Sperrblocks 69 angeschlossen, dessen Ausgangsanschlüsse C, D über Versorgungsleitungen 74, 76 mit dem Ringraum 40 bzw. dem Zylinderraum 38 verbunden sind. Der Druck in diesen Druckräumen 38, 40 wird jeweils über Drucksensoren 78, 80 und die effektive Länge des Oberlenkers 12 über einen Wegsensor 82 erfasst. Die Stromversorgung dieser Sensoren 78, 80, 82 sowie die Signalverbindung mit einem AD-Wandler erfolgt über Signalleitungen 84, die beispielsweise über Steckverbinder 85 mit dem Traktor verbunden sind. Die hydraulische Verbindung des Oberlenkers 12 mit dem Traktor kann ebenfalls über herkömmliche Schnellkuppelanschlüsse oder durch feste Verschraubungen erfolgen.

Bei dem dargestellten Ausführungsbeispiel sind die einzelnen elektronischen Komponenten wie beispielsweise die elektronischen Steuergeräte, Anzeigegeräte, Sensoren, Vorsteuerventile, etc. über ein geeignetes Bussystem beispielsweise einen CAN-Bus miteinander verbunden, so dass auch Elektronikfunktionen mit hoher Komplexität realisierbar sind.

Zum Ausfahren des Oberlenkers 12 wird beispielsweise das Proportionalventil 44 in Richtung seiner mit a gekennzeichneten Position verstellt, so dass Druckmittel über die Druckwaage 46, die aufgesteuerte Zulaufmessblende (Proportionalventil 44), den Vorlaufkanal 60, die Arbeitsleitung 66, den Sperrblock 69 zum Zylinderraum 38 strömt, so dass der Kolben des hydraulischen Oberlenkers 12 nach rechts verschoben wird und somit dessen Wirklänge vergrößert wird. Das entsprechend aus dem Ringraum 40 verdrängte Druckmittel strömt über die Versorgungsleitung 74, das vom Druck im Vorlauf aufgesteuerte Sperrventil 70, die Arbeitsleitung 68, den Rücklaufkanal 62, das Proportionalventil 44 und den Ablaufkanal 59 zum Tank 16 hin ab. Die sich dabei in den Druckräumen 38, 40 einstellenden Drücke werden über die beiden Sensoren 78, 80 erfasst und bei einer im Folgenden noch näher beschriebenen Regelung berücksichtigt. Entsprechend wird auch der Hub des Oberlenkers 12 über den Wegaufnehmer 82 erfasst und als Ist-Signal dem elektronischen Steuergerät 20 der Oberlenkerregelung zugeführt.

Ein derartiger Wegaufnehmer 82 kann beispielsweise als magnetostriktiver Positionssensor ausgeführt sein, der nach dem physikalischen Phänomen der Magnetostriktion eine berührungslose Positionsmessung ermöglicht.

Ein Vorteil der in Figur 2 dargestellten Lösung besteht darin, dass auf die üblicher Weise in die Wegeventilscheibe 18 integrierten mechanischen Sperrventile zur leckölfreien Einspannung des Oberlenkers 12 verzichtet werden kann, so dass in den Leitungen 66, 68, 60, 62 keine Drücke eingespannt sind. Der Steuerdruck in der Steuerölversorgungsleitung 98 kann abgeschaltet werden, so dass eine ungewollte Verstellung des Proportionalventils 44 verhindert werden kann.

Mit der in Figur 2 dargestellten Oberlenkeranordnung bestehen prinzipiell drei Möglichkeiten, den hydraulischen Oberlenker 12 zu verstellen.

Zum einen kann die Länge des Oberlenkers 12 manuell eingestellt werden, um die Neigung des Anbaugerätes einzustellen. Zum anderen kann das Anbaugerät bahngesteuert verfahren werden, wobei jeder Hubposition der Unterlenker 30 ein Sollwert für die Oberlenkerlänge zugeordnet ist, so dass das Anbaugerät beispielsweise im Steilaushub oder im Parallelaushub angehoben werden kann.

Die dritte Möglichkeit besteht darin, während der elektrohydraulischen Hubwerksregelung die Druckregelung des Oberlenkers zu aktivieren, so dass die Entlastung oder Belastung von Nachlaufgeräten des Anbau-/Aufsattelgerätes regelbar ist. Prinzipiell können die Bahnsteuerung und die Druckregelung auch beide aktiviert sein.

Eine Längenregelung des hydraulischen Oberlenkers 12 mit einer direkten Sollwertvorgabe ist von der Bedienperson praktisch nicht sinnvoll nutzbar, wobei die oben genannte manuelle Längeneinstellung über das Bedienfeld sicherer als eine Längenregelung ist, da beispielsweise beim Loslassen der Taster zur Betätigung des Oberlenkers - ähnlich wie bei der elektrohydraulischen Hubwerksregelung - ein sofortiger Bewegungsstopp erfolgt. Bei einer Sollwertvorgabe durch den Fahrer würde der Oberlenker in Richtung dieses Sollwertes verstellt werden. D.h. für die manuelle Längeneinstellung ist keine Längenregelung des Oberlenkers erforderlich.

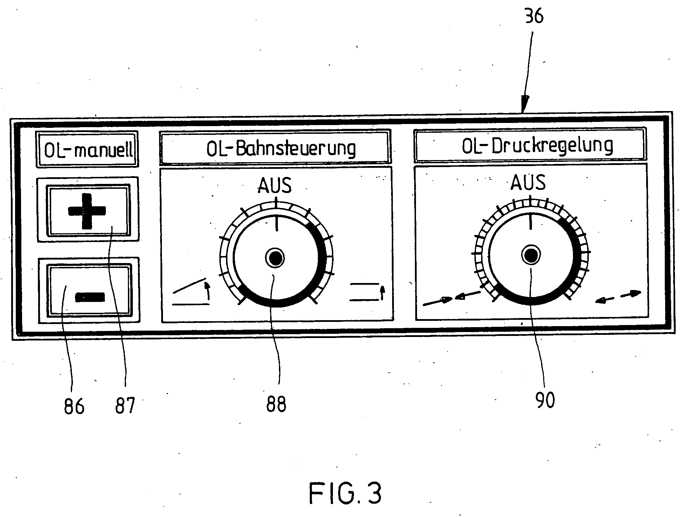

Figur 3 zeigt eine vergrößerte Darstellung des Bedienfeldes 36, das in Reichweite der Bedienperson in der Traktorkabine 26 angeordnet ist. Alternativ dazu kann ein Display mit Einstellpotentiometern und Tastern verwendet werden. Dieses Bedienfeld 36 hat im Wesentlichen drei Bedienelemente: zwei Taster 86, 87 zur manuellen Längenverstellung des Oberlenkers 12, wobei über den mit + gekennzeichneten Taster 87 die Oberlenkerlänge vergrößert und über den mit - gekennzeichneten Taster 86 die Oberlenkerlänge verkürzt wird.

Das Bedienfeld 36 hat desweiteren Betätigungselemente, beispielsweise einen Drehknopf eines Potentiometers 88, zur Aktivierung der Längenregelung des Oberlenkers 12, so dass entsprechend eine Bahnsteuerung des Hubwerks vorliegt. Durch Verdrehen des Potentiometers 88 nach links in Figur 3 wird der Oberlenker 12 während des Anhebens des Hubwerks 2 verkürzt, so dass die Steilheit des Aushubs vergrößert wird. Bei Verstellen nach rechts wird der Oberlenker 12 verlängert, so dass das Anbaugerät je nach Einstellung parallel zum Boden gehalten werden kann (Parallelaushub).

Mit einem weiteren Potentiometer 90 wird entsprechend die Druckregelung für den Oberlenker 12 aktiviert, wobei durch Verstellen des Potentiometers 90 nach links in Figur 3 mit dem Oberlenker 12 am Anbaugerät gezogen wird, während durch eine Verdrehung nach rechts mit dem Oberlenker gedrückt wird. Wie im Folgenden noch näher erklärt, können auch beide Regelungen aktiviert sein.

Die manuelle Einstellung der Oberlenkerlänge kann auch über die am Heck oder an den Kotflügeln des Traktors 1 angeordneten Taster 28 vorgenommen werden, wobei Tasterpaare der elektrohydraulischen Hubwerksregelung und andere Tasterpaare der Oberlenkerlängenverstellung zugeordnet sind. Die Funktion bzw. Wirkung dieser Taster entspricht genau den Tastern 86, 87 in Figur 3.

Für die manuelle Verstellung wird beispielsweise die +-Taste 87 betätigt, so dass der Oberlenker 12 so lange verlängert wird, wie die Taste gedrückt bleibt. Durch Betätigen der Taste 86 wird entsprechend der Oberlenker verkürzt, wobei bei Loslassen der jeweiligen Taste 86, 87 sofort die Oberlenkerbewegung stoppt. Bei Betätigen der Tasten 86, 87 wird der Volumenstromsollwert an das Proportionalventil 44 in einer Rampe langsam erhöht, wobei beispielsweise ein Anstieg auf ca. 20 l/min innerhalb von 4 sec erfolgt. Durch dieses langsame Hochregeln des Volumenstromsollwertes ist ein sehr genaues Positionieren ermöglicht. Prinzipiell ist der Bedienperson dieses rampenartige Hochfahren des Volumenstroms aus der Betätigung herkömmlicher Heck- und Fronthubwerke bekannt so dass die Oberlenkereinstellung sicher und intuitiv erfolgen kann.

In dem Fall, in dem mehrere Taster 86, 87 oder auch Taster der EHR-Hubwerksregelung gleichzeitig betätigt werden, wird kein Betätigungssignal als richtig gewertet - es erfolgt keine Verstellung des Hubwerks. Diese Verstellung kann erst durch erneutes Betätigen eines einzigen Tasters 86, 87 erfolgen.

Über die Längenregelung des Oberlenkers 12 kann das Arbeitsgerät beim Ausheben entlang einer bestimmten Bewegungsbahn geführt werden. Diese Bewegungsbahnen sind im Wesentlichen der "Steilaushub" und der "Parallelaushub". Beim Steilaushub wird der Oberlenker 12 während der Hebenbewegung der Unterlenker 30 (EHR-Regelung) verkürzt, so dass das Gerät 32 steiler am Traktor angebaut ist, als wenn keine Oberlenkerverkürzung stattgefunden hätte. Der Grad der Steilheit, d.h. das Maß, um welches sich der Oberlenker bei Lageränderung der Unterlenker 30 verkürzen soll, wird am Potentiometer 88 eingestellt. Je weiter der Potentiometer 88 nach links gedreht wird, umso steiler wird die Bewegungsbahn des Anbaugerätes 32 sein. Bei Einstellen des Potentiometers 88 in die Position AUS findet keine Längenänderung des Oberlenkers 12 während der elektrohydraulischen Hubwerksregelung statt.

Beim Parallelaushub wird entsprechend der Oberlenker 12 während des Hebens verlängert, so dass das Anbaugerät 32 flacher am Traktor 1 angebaut ist, also in dem Fall, in dem keine Oberlenkerverlängerung erfolgt. Um welches Maß das Gerät bei der jeweiligen Hubwerkshöhe flacher steht, wird am Potentiometer 88 durch Verdrehen nach rechts eingestellt. Abhängig vom Anbaugerät und von der über die elektrohydraulische Hubwerksregelung eingestellten Bahnkurve bleibt das Gerät 32 bei passender Einstellung des Potentiometers 88 parallel zum Boden.

Mit der über den Potentiometers 90 eingestellten Oberlenker-Druckregelung kann eine Achslastveränderung am Traktor und am Anbaugerät 32 erfolgen. Das Ziel dieser Druckregelung ist eine Kraftstoffeinsparung, da beispielsweise durch eine Hinterachslasterhöhung weniger Schlupf und dadurch eine höhere Fahrgeschwindigkeit und entsprechend auch eine höhere Flächenleistung, d.h. eine größere bearbeitete Fläche pro Zeiteinheit realisierbar ist und somit entsprechend weniger Kraftstoff verbraucht wird. Über die Oberlenker-Druckregelung kann eine auf das Arbeitsgerät 32 wirkende Zugkraft oder eine Druckkraft eingestellt werden, wobei die Höhe der Kraft über das Potentiometer 90 eingestellt wird. D.h. bei Verstellung des Potentiometers 90 in seine "AUS"-Position wird nicht ein Druck von 0 bar eingeregelt, sondern die Druckregelung abgeschaltet.

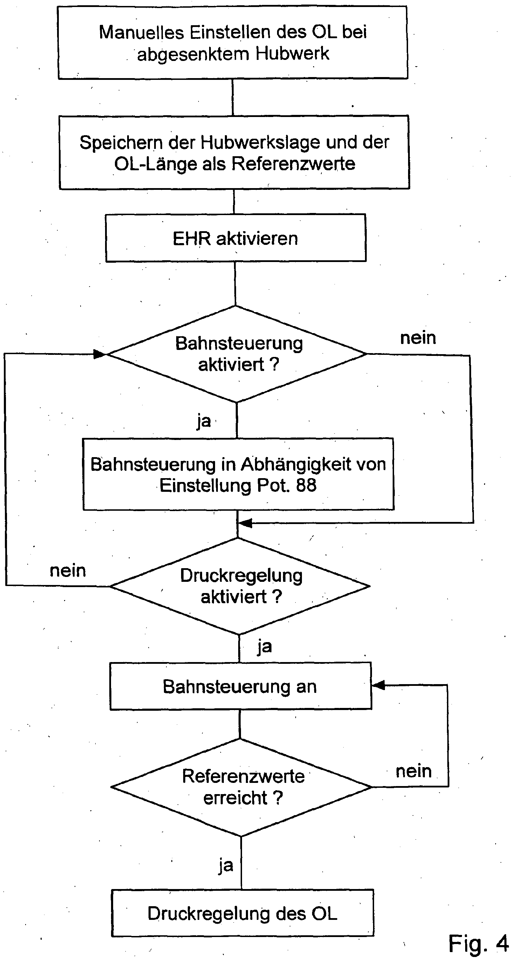

Zum besseren Verständnis wird anhand der Figuren 4 die automatische Ansteuerung des Oberlenkers 12 beispielhaft erläutert.

In einem ersten Verfahrensschritt wird das Hubwerk manuell in eine vorbestimmte Grundposition verfahren, die von der Art des Anbau-/Aufsattelgerätes abhängen kann. Üblicher Weise wird das Hubwerk 2 durch manuelle Ansteuerung der Hubzylinder 8 abgesenkt bis eine Arbeitsstellung erreicht ist. Bei Erreichen dieser Arbeitsstellung wird dann die Länge des Oberlenkers über die Taster 86, 87 manuell von der Bedienperson eingestellt und nach der Einstellung die Referenzlänge des Oberlenkers und die Hubwerkslage (mit Bezug zum Traktor 1) als Referenzwertepaar automatisch im Speicher des Steuergerätes 20 abgelegt. Somit muss der Bediener keine manuellen Vorgaben machen.

Nach dem manuellen Einstellen der zur vorbestimmten Hubwerkslage gehörenden Referenzlänge kann das Hubwerk 2 nach den verschiedenen Bedienstrategien betätigt werden. Grundsätzlich sehen diese Bedienstrategien vor, dass der Oberlenker in den Automatikfunktionen je nach Einstellung der Potentiometer 88, 90 in Abhängigkeit von der Referenzlänge bei aktivierter elektrohydraulischer Hubwerksregelung (EHR) verstellt wird. Wie bereits eingangs ausgeführt, wird über die EHR die Lage der Unterlenker 30 mit Bezug zum Traktor 1 eingestellt. Über die Oberlenker-Automatik kann - je nach gewählter Regelstrategie - die Länge des Oberlenkers (Oberlenker-Bahnsteuerung) oder der Druck am hydraulischen Oberlenker 12 geregelt werden.

Wird nun über die Bedienperson der Potentiometer 88 für die Oberlenker-Bahnsteuerung aus seiner "AUS"-Position heraus verstellt, verändert der Oberlenker 12 seine Länge, wenn das Hubwerk 2 über die EHR betätigt wird. Dabei wird in Abhängigkeit vom Abstand der aktuellen Lage der Unterlenker 30 zu der mit der Referenzlänge abgespeicherten Lage der Längensollwert des Oberlenkers 12 verändert, wobei die Größe der Längensollwertänderung bezogen auf die manuell eingestellte Referenzlänge und Referenzlage des Hubwerks über den Potentiometer 88 vorgegeben wird. D.h. bei der so genannten Oberlenker-Bahnsteuerung erfolgt eine Lageregelung der Unterlenker 30 und eine Längenregelung des Oberlenkers 12 in Abhängigkeit von der Hubwerkslage und der über den Potentiometer 88 eingestellten Kennlinie (Steilaushub/Parallelaushub).

Bei Verstellung des Potentiometers 90 zur Aktivierung der Oberlenker-Druckregelung wird die Oberlenkerlänge verstellt, um einen vorbestimmten Drucksollwert oder eine Soll-Druckdifferenz in den Druckräumen 38, 40 des Oberlenkers 12 einzustellen. Diese Druckregelung arbeitet nur während des Regelbetriebs der EHR, d.h. bei Lage-, Zugkraft oder Mischregelung der Unterlenker 30. Die Druckregelung wird sofort unterbrochen, wenn die EHR abgeschaltet ist, sich das Hubwerk in der Transport-stellung, befindet oder das Hubwerk verriegelt ist. Eine Unterbrechung erfolgt auch bei Betätigung der externen Taster und im Fall einer Fehlermeldung bei der Anlagen-steuerung. Wie bereits eingangs beschrieben, kann über die Verstellung der Druckregelung die Achslastverteilung am Traktor und am Gerät beeinflusst werden, um das Arbeitsergebnis oder den Spritverbrauch zu optimieren.

Bei aktivierter Druckregelung wird automatisch die Bahnsteuerung aktiviert, da es sonst vorkommen kann, dass das Arbeitsgerät beim Ausheben nicht ausreichend ausgehoben oder beim Einziehen nicht richtig eingezogen wird. Die Bahnsteuerung arbeitet dann insbesondere beim Ausheben ohne Veränderung der Oberlenkerlänge, so dass keine Steil- oder Parallelaushub erfolgt.

In dem Fall, in dem der Oberlenker auf eine von der Referenzlänge abweichenden Wert verstellt ist, wird über die Bahnsteuerung der Oberlenker 12 zunächst auf die Referenzlänge eingestellt. Bei Erreichen der Hubwerkssollwertlage und der Oberlenker-Referenzlänge wird dann die Bahnsteuerung von der Druckregelung abgelöst, wobei der eingeregelte Druck über den Potentiometer 90 vorgegeben ist.

Prinzipiell kann natürlich auch die Bahnsteuerung und die Druckregelung parallel durch Verstellung der Potentiometer 88, 90 aktiviert sein; auch in diesem Fall wird die Oberlenkerlänge auf die Referenzlänge eingestellt und anschließend die Bahnsteuerung von der Druckregelung abgelöst. Diese Ablösung erfolgt in einem mehrere Sekunden dauernden kontinuierlichen Übergang. Bei einem Pflug 32 ist dies beispielsweise notwendig, da sich die hinteren Pflugschare zunächst einziehen müssen (langer Oberlenker), um vom Boden eine Kraft nach unten aufnehmen zu können. Erst dann kann man wieder am Oberlenker ziehen (kurzer Oberlenker 12), um diese Scharkräfte auf die Hinterachse des Traktors 1 leiten zu können.

Die Betriebssicherheit bei der Betätigung des Hubwerks 8 kann durch die im Folgenden beschriebenen Maßnahmen wesentlich erhöht werden, wobei es in vielen Fällen schwierig ist, die Arbeitsfunktionen von den im Folgenden beschriebenen Sicherheitsfunktionen zu trennen.

Wie bereits ausgeführt, gilt prinzipiell, dass bei einer Verriegelung des Hubwerks 2 oder bei einem Stopp der elektrohydraulischen Hubwerksregelung keine Oberlenkerbewegung zugelassen wird. Dabei kann durchaus der Potentiometer 88 aus seiner "AUS"-Position heraus bewegt sein - gemäß der Sicherheitsfunktion wird sichergestellt, dass sich der Oberlenker dann ggf. geregelt nicht bewegt.

Bei eingestellter Druckregelung am Potentiometer 90 wird eine Verstellung der Oberlenkerlänge nur in einem gewissen Längenbereich um die Referenzlänge herum erlaubt, so dass der Oberlenker 12 bei einer Druckregelung nicht den gesamten Hub durchfahren kann.

Des Weiteren ist vorgesehen, bei Überschreitung einer bestimmten Traktor-Fahrgeschwindigkeit die Druckregelung abzuschatten. Eine Aktivierung der Druckregelung ist dann nur möglich, wenn das Potentiometer 90 manuell zunächst auf "AUS" verstellt und dann wieder die gewünschte Kennlinie eingestellt wird. Dies ist erforderlich, da nach einer schnellen Fahrt des Traktors 1 und vergessener manueller Deaktivierung der Druckregelung der Pflug 32 beim Abbauen in Druckregelung übergeht und dann eine von der Bedienperson nicht erwünschte Bewegung ausführt.

In dem Fall, in dem mit den externen Tastern der EHR das Hubwerk 2 gehoben oder gesenkt wird, wird sofort die Druckregelung und/oder die Wegregelung ausgeschaltet, so dass keine Längenänderung des Oberlenkers 12 erfolgt. Von dieser Vorsichtsmaßnahme wird in einigen Sonderfällen abgewichen:
Wenn in der EHR-Transportstellung des Hubwerks 2 die EHR-Taster 28 betätigt werden, erfolgt neben der Verstellung der Unterlenker 30 auch noch die Rückstellung des Oberlenkers 12 aus Steilaushub oder Parallelaushub in die vormals manuell eingestellte Referenzlage des Oberlenkers 12. Dies ist eine einmalige Zurückstellung, die vorzugsweise auch nur beim Betätigen des EHR-Senken-Tasters erfolgt. Beim Heben erfolgt keine Bahnsteuerung mehr und die Oberlenkerlänge bleibt unverändert..Dies ist beispielsweise dann erforderlich, wenn ein steil ausgehobener Pflug 32 beim Absenken zum Abbauen steil bleibt. Dann wäre eine aufwendige manuelle Doppelverstellung von Unterlenker 30 und Oberlenker 12 notwendig. Stattdessen fährt nach der beschriebenen Sicherheitsstrategie der Oberlenker 12 zügig in seine Referenzlänge, während das Hubwerk 2 allmählich absinkt.

In dem Fall, in dem die EHR-Taster los gelassen werden, stoppt auch sofort die Verstellung des Oberlenkers 12 in die Referenzlage.

Falls das Hubwerk 2 nach erfolgter Rückstellung des,Oberlenkers 12 in seine Referenzlänge mit den Tastern 28 nochmals auf- oder ab bewegt wird, wird die Oberlenkerlänge nicht mehr verändert. Es kann auch nicht ohne erneute Entriegelung der EHR in die Druckregelung oder Bahnsteuerung des Oberlenkers 12 umgeschaltet werden.

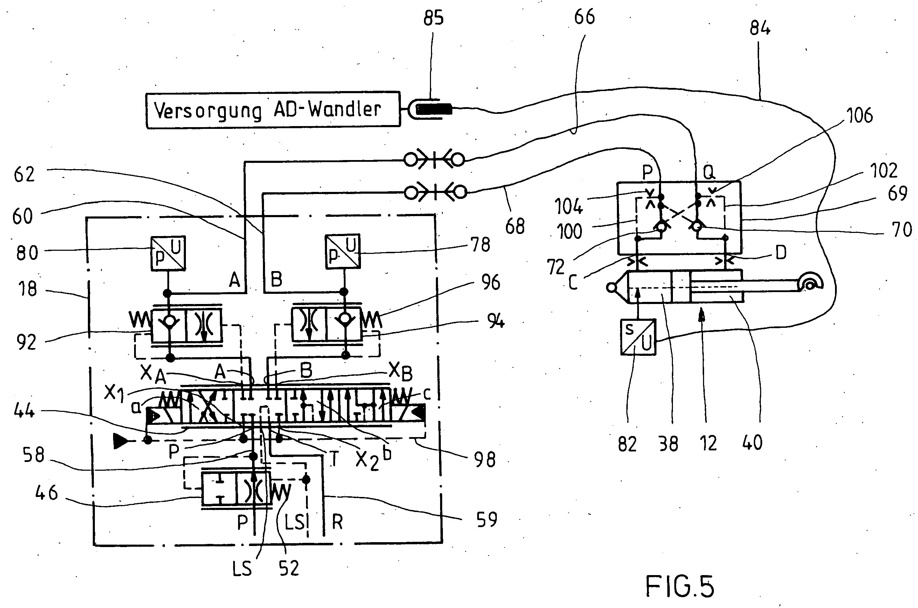

Anhand Figur 5 wird ein weiteres Ausführungsbeispiel einer Oberlenker-Automatik erläutert. Der Grundaufbau dieses Ausführungsbeispiels entspricht demjenigen aus Figur 2, so dass hier nur die wesentlichen Unterschiede erläutert werden. Auch bei der in Figur 5 dargestellten hydraulischen Schaltung erfolgt die Verstellung des hydraulischen Oberlenkers 12 über eine Wegeventilsektion 18 des Mobilsteuerblocks, die ein Proportionalventil 44 mit vorgeschalteter LS-Druckwaage 46 aufweist. Wie beim Ausführungsbeispiel gemäß Figur 2 ist die LS-Druckwaage durch die Feder 52 und den Lastdruck am Oberlenker 12 in Öffnungsrichtung und den Druck im Zulaufkanal 58, d.h. stromaufwärts der Zumessblende in Schließrichtung beaufschlagt. Dem Proportionalventil 44 sind zwei Senkenmodule 92, 94 zugeordnet, die jeweils in ihrer federvorgespannten Grundposition als entsperrbares Rückschlagventil zur leckölfreien Einspannung des Oberlenkers 12 dienen und in einer Regelpositiön den vom Oberlenker 12 zurückströmenden Druckmittelvolumenstrom im Sinne einer Ablaufregelung steuern. Jeder Senkenmodul 92, 94 ist von einer Feder 96 und durch den Druck in den Vorlaufkanälen 60, 62 jeweils in Richtung der Rückschlagposition und einen Pilot- oder Steuerdruck in einer Steuerölversorgungsleitung 98 in Richtung seiner Drosselstellung beaufschlagt.

Der Druck im Druckmittelströmungspfad zwischen den Senkenmodulen 92, 94 und den Arbeitsanschlüssen A, B wird über Druckaufnehmer 78, 80 erfasst.

Der Aufbau des Proportionalventils 44, der Senkenmodule 92, 94 und der LS-Druckwaage 46 ist im Prinzip aus Anwendungen für EHR bekannt, wie sie in der DE 10 2005 005 314 A1 beschrieben sind, so dass in der vorliegenden Anmeldung nur die zum Verständnis der Erfindung wesentlichen Elemente beschrieben sind.

Das Wegeventil 44 hat einen Druckanschluss P, einen Tankanschluss T sowie zwei Ausgangsanschlüsse A, B, an die die Kanäle 60, 62 angeschlossen sind. Das Proportionalventil 44 ist des Weiteren mit zwei Steueranschlüssen X1 und X2 ausgeführt, über die der Steuerdruck in der Steuerölversorgungsleitung 98 abgegriffen werden kann. Der die Senkenmodule 92, 94 in Drosselrichtung beaufschlagende Druck wird über Steueranschlüsse XA, XB abgegriffen. In seiner federvorgespannten Grundposition sind die Anschlüsse A, B, P, T, XA, XB, X1 und X2 abgesperrt und ein LS-Anschluss mit dem Ablaufkanal 59 verbunden.

Bei Bestromen des in Figur 5 linken Vorsteuerventils 48 (Druckreduzierventil) wird das Proprtionalventil in Richtung seiner mit a gekennzeichneten Positionen verstellt und der Druckanschluss P mit dem Arbeitsanschluss B und der Arbeitsanschluss A mit dem Tankanschluss T verbunden. Des Weiteren ist dann die Steuerölversorgungsleitung 98 mit dem Anschluss XA verbunden, so dass das Senkenmodul 92 durch den Steueröldruck in Drosselrichtung beaufschlagt ist. Die beiden Anschlüsse XB und X2 sind abgesperrt.

Bei Verstellung in Richtung der mit b gekennzeichneten Position werden entsprechend der Druckanschluss P mit dem Arbeitsanschluss A und der Arbeitsanschluss B mit dem Tankanschluss T sowie der Steueranschluss X2 mit dem Steuerausgangsanschluss XB verbunden. Die Anschlüsse XA und X1 sind abgesperrt. Dementsprechend wird dann das Senkenmodul 94 durch den Steuerdruck in der Steuerölversorgungsleitung 98 in Richtung seiner Drosselstellung beaufschlagt, um eine Ablaufregelung zu ermöglichen. Bei Verstellung des Proportionalventils 44 in Richtung der mit c gekennzeichneten Positionen wird der Oberlenker 12 in seine Schwimmstellung gebracht. Es sind alternativ dazu auch andere Wegeventile einsetzbar, wie z.B. von Danfoss, PVG, Hasco. Hier werden nur zwei Sperrventile verwendet.

Ähnlich wie beim vorbeschriebenen Ausführungsbeispiel ist auf den Oberlenker 12 ein Sperrblock 69 aufgesetzt, dessen Anschlüsse P, Q an die Arbeitsleitungen 66, 68 angeschlossen sind. Wie in Figur 5 angedeutet, können diese Arbeitsleitungen 66, 68 über Schlauchkupplungen an die Traktorhydraulik angeschlossen werden.

Der Sperrblock 69 hat wiederum zwei vom Druck in der jeweils anderen Leitung entsperrbare Sperrventile 70, 72, die eine Druckmittelströmung von den Anschlüssen P, Q zu den zugeordneten Ausgangsanschlüssen C, D des Sperrblocks 69 zulassen, so dass entsprechend die Druckräume 38, 40 mit der Pumpe oder dem Tank verbindbar sind. Der Hub des Oberlenkers 12 wird wiederum über einen Wegsensor 82 erfasst.

Bei dem dargestellten Ausführungsbeispiel ist der Sperrblock 69 mit zwei Bypassleitungen 100, 102 ausgeführt, über die im Bereich zwischen den Anschlüssen C, P und D, Q das jeweilige Sperrventil 70, 72 umgangen wird, so dass die genannten Anschlüsse über die Bypassleitungen 100, 102 und darin angeordnete Drosseln 104, 106 direkt verbunden sind. Der Querschnitt ist jedoch so ausgelegt, dass die Steuerölverluste vergleichsweise gering sind.

Im Druckmittelströmungspfad zwischen dem Sperrblock 69 und den Druckräumen 38, 40 kann bei den Ausführungsbeispielen gemäß den Figuren 2 und 5 jeweils eine weitere Drosselstelle vorgesehen werden.

Der wesentliche Unterschied zwischen den Ausführungsbeispielen gemäß den Figuren 2 und 5 besteht darin, dass beim zuletzt beschriebenen Ausführungsbeispiel die Druckaufnehmer 78, 80 traktorseitig am Wegeventil 18 vorgesehen sind, während sie bei dem Ausführungsbeispiel gemäß Figur 2 direkt am Sperrblock angeordnet werden. Die letztgenannte Lösung ist hinsichtlich der mechanischen Belastung der Druckaufnehmer 78, 80 etwas ungünstiger, da der Sperrblock 69 und der Oberlenker am Heck des Traktors äußeren Einflüssen ausgesetzt sind.

Ein weiterer Unterschied besteht darin, dass aufgrund der beiden Bypassleitungen 100, 102 beim Ausführungsbeispiel gemäß Figur 5 eine Absperrung über das Wegeventil 18 oder über sonstige zusätzliche Sperrventile erfolgen muss. Hierzu sind beim Ausführungsbeispiel gemäß Figur 5 die beiden Senkenmodule 92, 94 erforderlich. Beim Ausführungsbeispiel gemäß Figur 2 erfolgt die Absperrung leckagefrei durch die beiden Sperrventile 70, 72 des Sperrblocks 69, so dass der Oberlenker 12 leckagefrei eingespannt sind.

Vorteilhaft ist bei dem Ausführungsbeispiel gemäß Figur 2, dass bei Betätigung des Oberlenkers 12 die sich in den Druckräumen 38, 40 einstellenden Drücke exakt messbar sind, während beim Ausführungsbeispiel gemäß Figur 5 bei Ansteuerung des Oberlenkers 12 eine Verfälschung durch den über die Bypassleitungen 100, 102 geführten Teilstrom auftritt. Aufgrund dieser Bypassleitungen 100, 102 kann es auch bei einem Bruch der Arbeitsleitungen 66, 68 zu einem langsamen Einfahren oder - je nach Lastfall - Ausfahren des Oberlenkers 12 und somit zu einem Kippen des Anbaugerätes kommen.

Die manuelle Verstellung des Oberlenkers 12 und die Bahnsteuerung mit einer Längenregelung des Oberlenkers 12 erfolgt praktisch genau so wie beim vorbeschriebenen Ausführungsbeispiel. Bei der Druckregelung wird ein anderes Regelverfahren als beim vorbeschriebenen Ausführungsbeispiel eingesetzt, da - wie vorstehend erwähnt - während der Verstellung des Oberlenkers 12 eine Verfälschung der Druckmesssignale auftreten kann.

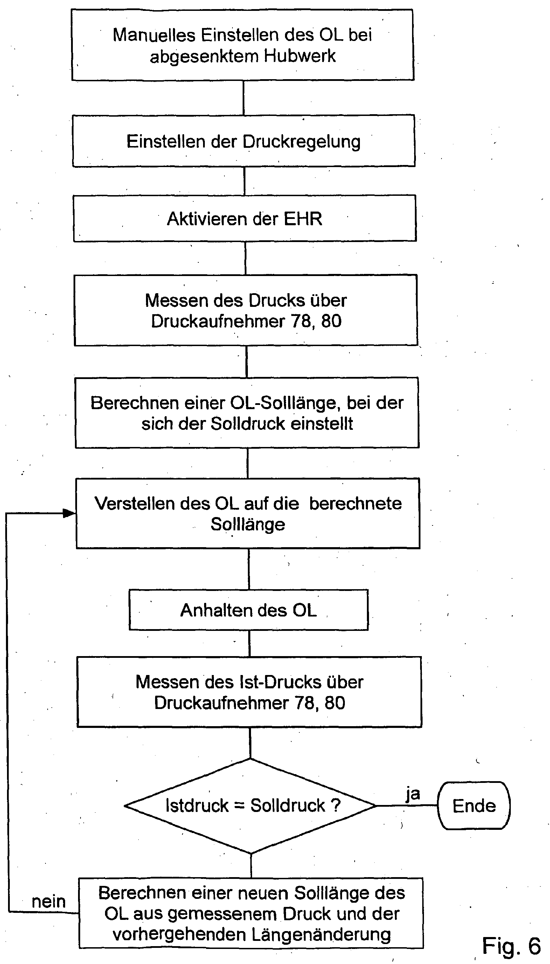

Das Grundprinzip dieses Druckregelverfahrens ist in Figur 6 dargestellt.

Zunächst wird wieder, wie beim eingangs beschriebenen Ausführungsbeispiel das Hubwerk manuell in seine Hubwerksarbeitsstellung oder sonstige Solllage gebracht und die Oberlenkerlänge manuell auf die Referenzlänge eingestellt.

Anschließend wird die Druckregelung über den Potentiometer 90 eingestellt und die elektrohydraulische Hubwerksregelung aktiviert. Bei noch still stehendem Oberlenker 12 werden dann die Drücke in den Räumen 38, 40 über die Druckaufnehmer 78, 80 gemessen.

In einem nächsten Verfahrensschritt werden aus den gemessenen Drücken in den Druckräumen 38, 40 und der aktuellen Lastrichtung (ziehende Last/drückende Last) ein Druckgradient berechnet, bei dem die Druckänderung am Oberleriker 12 in Abhängigkeit von dessen Längenänderung ermittelt wird. Aus diesem Druckgradienten kann dann diejenige Oberlenkerlänge errechnet werden, bei der sich der gewünschte Solldruck einstellt.

Der Oberlenker wird dann nach der eingangs beschriebenen Längenregelung auf den so berechneten Sollwert.

Der Druck in den Druckräumen 38, 40 stellt sich dabei innerhalb sehr kurzer Zeit über die Bypassleitungen 100, 102 auch in den Leitungsabschnitten 66, 68 und 60, 62 ein, so dass über die ins Wegeventil 18 integrierten Druckaufnehmer unverfälschte Drucksignale aufgenommen werden können. Nach einer vorbestimmten Druckausgleichzeit (etwa 1 sec) wird wiederum der Druck in den Druckräumen 38, 40 gemessen und aus der zuvor durchgeführten Längenänderung und der sich dabei einstellenden Druckänderung ein neuer Druckgradient berechnet, der mit starker Gewichtung mit dem zuvor berechneten Druckgradienten gemittelt wird.

Aus dem neuen, gemittelten Druckgradienten wird dann eine neue Oberlenkerlänge berechnet, bei der sich der gewünschte Solldruck einstellt. Dieser Zyklus wird so lange wiederholt, bis sich der gewünschte Solldruck am Oberlenker einstellt. Dabei wird ein Totband von etwa +/- 5 bar als Toleranz zugelassen.

Sollte der dann eingeregelte Druck am Oberlenker 12 im Laufe der Zeit dann wieder aus diesem Totband herauslaufen, wird die vorbeschriebene intermittierende Druckregelung erneut gestartet.

In der Praxis zeigte es sich, dass nach zwei Regelzyklen der gewünschte Solldruck innerhalb des genannten Totbandes einstellbar ist. Die vorbeschriebene Anwendung ist insbesondere bei landwirtschaftlichen Nutzfahrzeugen ausreichend schnell und aufgrund ihrer Einfachheit und Flexibilität den eingangs beschriebenen herkömmlichen Lösungen überlegen

Offenbart sind ein Verfahren zum Ansteuern eines Hubwerks und ein Hubwerk, das nach einem derartigen Verfahren ansteuerbar ist. Das Hubwerk hat einen hydraulisch verstellbaren Oberlenker, der wahlweise manuell, in Druck- oder in Längenregelung verstellbar ist.

## Patentansprüche

1. Verfahren zum Ansteuern eines Hubwerks (2) eines mobilen Arbeitsgerätes, insbesondere eines Traktors (1), wobei das Hubwerk (2) zumindest einen mittels einer elektrohydraulischen Hubwerksregelung verstellbaren Unterlenker (30) und zumindest einen hydraulischen Oberlenker (12) hat, dessen Länge durch Ansteuern über einen Oberlenkerregelkreis verstellbar ist, um eine Solllage eines in das Hubwerk (2) eingesetzten Gerätes einzustellen, wobei der Oberlenkerregelkreis eine Druckregelung- und eine Längenregelung in Abhängigkeit vom am hydraulischen Antrieb wirksamen Druck und in Abhängigkeit-von der Länge des Oberlenkers (12) ermöglicht, **dadurch gekennzeichnet, dass** die Art der Regelung sowohl manuell von einer Bedienperson an einem Bedienfeld (36) als auch automatisch in Abhängigkeit von Betriebszuständen des Hubwerks, des Oberlenkers oder des Traktors eingestellt wird.

2. Verfahren nach Patentanspruch 1, wobei der Oberlenker (12) einen Hydrozylinder zur Verstellung der Oberlenkerlänge ist.

3. Verfahren nach Patentanspruch 1 oder 2, wobei als Referenzwert für die Oberlenkerlänge eine zuletzt manuell eingestellte Oberlenkerlänge verwendet wird, die einer vorbestimmten Hubwerksarbeitsposition zugeordnet ist.

4. Verfahren nach Patentanspruch 3, wobei die Referenzlänge bei in Regelstellung befindlichem Hubwerk (2) eingestellt wird.

5. Verfahren nach einem der vorhergehenden Patentansprüche, wobei über eine Bedienperson manuell Kennlinien der Druck- oder Längenregelung des Oberlenkers (12) verstellbar sind.

6. Verfahren nach einem der vorhergehenden Patentansprüche, wobei die Längen- oder Druckregelung des Oberlenkers (12) nur bei einer Hubwerksregelung aktiviert wird.

7. Verfahren nach einem der vorhergehenden Patentansprüche, wobei während der Druckregelung nur eine Verstellung der Oberlenkerlänge innerhalb eines vorbestimmten Bereiches zugelassen wird.

8. Verfahren nach einem der vorhergehenden Patentansprüche, wobei automatisch von einer Längenregelung auf eine Druckregelung des Oberlenkers (12) umgeschaltet wird, wenn dieser seine Referenzlänge und das Hubwerk (2) seine Hubwerksarbeitsposition bzw. Regelposition erreicht hat.

9. Verfahren nach einem der vorhergehenden Patentansprüche, wobei bei Einstellung der Druckregelung die Längenregelung des Oberlenkers (12) aktiviert und zunächst in der Hubwerksarbeitsposition die Referenzlänge des Oberlenkers (12) eingestellt wird.

10. Verfahren nach einem der vorhergehenden Patentansprüche, wobei bei einer Unterbrechung oder Verriegelung der Hubwerksregelung keine Veränderung der Oberlenkerlänge durchgeführt wird.

11. Verfahren nach einem der vorhergehenden Patentansprüche, wobei bei Überschreiten einer Grenzfahrgeschwindigkeit die Druckregelung abgeschaltet wird und durch die Bedienperson wieder manuell aktiviert werden muss.

12. Verfahren nach einem der vorhergehenden Patentansprüche, wobei bei externer Betätigung der Hubwerksregelung die Oberlenkerregelung abgeschaltet wird.

13. Verfahren nach einem der vorhergehenden Patentansprüche, wobei in dem Fall; in dem in einer Transportstellung des Hubwerks (2) eine externe Betätigung der Hubwerksregelung erfolgt, der Oberlenker (12) in seine Referenzlänge verstellt wird.

14. Verfahren nach Patentanspruch 13, wobei nach Erreichen der Referenzlänge die Oberlenkerlänge erst nach manuellem Entriegeln der Hubwerksregelung verstellbar ist.

15. Verfahren nach einem der Patentansprüche 2 bis 14, wobei bei der Bypassdruckregelung die Druckregelung intermittierend erfolgt und der hydraulische Oberlenker (12) während der Druckregezyklen zur Messung des Drucks angehalten wird.

16. Verfahren nach Patentanspruch 15, mit den Schritten:
- Erfassen des Drucks in Druckräumen (38, 40) des Oberlenkers (12) bei stehendem Oberlenker (12);
- Berechnen einer Soll-Oberlenkerlänge in Abhängigkeit von der Lastrichtung sowie dem erfassten Ist-Druck, wobei sich bei dieser Solloberlenkerlänge der gewünschte Solldruck einstellen soll;
- Anhalten des Oberlenkers (12);
- Messen des Drucks in den Druckräumen (38, 40) des Oberlenkers (12) und
- Berechnen einer neuen Soll-Oberlenkerlänge in Abhängigkeit von dem nunmehr gemessenen Ist-Druck und von der zuvor berechneten alten Soll-Oberlenkerlänge und
- Wiederholen des Zyklus bis der Solldruck am Oberlenker (12) erreicht wird.

17. Verfahren nach einem der vorhergehenden Patentansprüche, wobei bei gleichzeitiger Betätigung externer Taster (28, 86, 87) die Oberlenkerregelung unterbrochen wird.

18. Hubwerk eines mobilen Arbeitsgeräts mit einer über eine elektrohydraulische Hubwerksregelung verstellbaren Unterlenkeranordnung (30) und mit zumindest einem über einen Oberlenkerregelkreis verstellbaren Oberlenker (12), wobei der Oberlenkerregelkreis derart ausgebildet ist, dass eine Längen- oder Druckregelung am Oberlenker (12) durchführbar ist,
**gekennzeichnet durch** ein Bedienfeld, das Bedienelemente (88, 90) zum Aktivieren und zum Einstellen von Kennlinien einer Bahn- und/oder Druckregelung und Bedienelementen (86, 87) zur manuellen Verstellung der Oberlenkerlänge aufweist.

## Claims

1. Method for activating a lifting unit (2) of a mobile working appliance, in particular a tractor (1), wherein the lifting unit (2) has at least one lower link (30) which is adjustable by means of an electro-hydraulic lifting unit controller, and at least one hydraulic upper link (12) whose length is adjustable by activation via an upper link control loop, in order to set a desired position of a device inserted into the lifting unit (2), wherein the upper link control loop allows pressure control and length control in dependence on pressure acting on the hydraulic drive and in dependence on the length of the upper link (12), **characterized in that** the type of control is set both manually by an operator on an operator control panel (36) and automatically in dependence on operating states of the lifting unit, the upper link or the tractor.

2. Method according to Patent Claim 1, wherein the upper link (12) is a hydraulic cylinder for adjusting the upper link length.

3. Method according to Patent Claim 1 or 2, wherein the reference value for the upper link length that is used is a last manually set upper link length which is assigned a predetermined lifting unit working position.

4. Method according to Patent Claim 3, wherein the reference length is set with the lifting unit (2) in a control position.

5. Method according to one of the preceding patent claims, wherein characteristics of the pressure or length control of the upper link (12) are manually adjustable by an operator.

6. Method according to one of the preceding patent claims, wherein the length or pressure control of the upper link (12) is activated only during a control of the lifting unit.

7. Method according to one of the preceding patent claims, wherein only an adjustment of the upper link length within a predetermined range is permitted during the pressure control.

8. Method according to one of the preceding patent claims, wherein there is an automatic switchover from a length control to a pressure control of the upper link (12) if the latter has reached its reference length and the lifting unit (2) has reached its lifting unit working position or control position.

9. Method according to one of the preceding patent claims, wherein, when setting the pressure control, the length control of the upper link (12) is activated and the reference length of the upper link (12) is set first of all in the lifting unit working position.

10. Method according to one of the preceding patent claims, wherein no change is carried out to the upper link length in the case of an interruption or locking of the lifting unit controller.

11. Method according to one of the preceding patent claims, wherein, in the case of a limit travelling speed being exceeded, the pressure control is switched off and must be manually activated again by the operator.

12. Method according to one of the preceding patent claims, wherein the upper link control is switched off in the case of external actuation of the lifting unit controller.

13. Method according to one of the preceding patent claims, wherein, in the case in which an external actuation of the lifting unit controller occurs in a transport position of the lifting unit (2), the upper link (12) is adjusted into its reference length.

14. Method according to Patent Claim 13, wherein, after reaching the reference length, the upper link length is adjustable only after manually unlocking the lifting unit controller.

15. Method according to one of Patent Claims 2 to 14, wherein, in the case of bypass pressure control, the pressure control takes place intermittently and the hydraulic upper link (12) is stopped during the pressure control cycles to measure the pressure.

16. Method according to Patent Claim 15, comprising the following steps:
- detecting the pressure in pressure chambers (38, 40) of the upper link (12) with the upper link (12) at a standstill;
- calculating a desired upper link length in dependence on the load direction and the detected actual pressure, wherein the desired pressure is to be set at this desired upper link length;
- stopping the upper link (12);
- measuring the pressure in the pressure chambers (38, 40) of the upper link (12) and
- calculating a new desired upper link length in dependence on the now measured actual pressure and on the previously calculated old desired upper link length and
- repeating the cycle until the desired pressure at the upper link (12) is reached.

17. Method according to one of the preceding patent claims, wherein the upper link control is interrupted with simultaneous actuation of external buttons (28, 86, 87).

18. Lifting unit of a mobile working appliance having a lower link arrangement (30) which is adjustable via an electro-hydraulic lifting unit controller and having at least one upper link (12) which is adjustable via an upper link control loop, wherein the upper link control loop is designed in such a way that length or pressure control can be carried out on the upper link (12), **characterized by** an operator control panel which has operator control elements (88, 90) for activating and for setting characteristics of a path and/or pressure control and operator control elements (86, 87) for manually adjusting the upper link length.

## Revendications

1. Procédé de commande d'un dispositif de levage (2) d'un engin de travail mobile, en particulier d'un tracteur (1), le dispositif de levage (2) présentant au moins un bras oscillant inférieur (30) réglable au moyen d'un réglage de dispositif de levage électrohydraulique et au moins un bras oscillant supérieur hydraulique (12) dont la longueur peut être réglée par commande par le biais d'un circuit de réglage de bras oscillant supérieur afin d'ajuster une position de consigne d'un dispositif placé dans le dispositif de levage (2) ; le circuit de réglage de bras oscillant supérieur permettant un réglage de la pression et un réglage de la longueur en fonction de la pression agissant au niveau de l'entraînement hydraulique et en fonction de la longueur du bras oscillant supérieur (12), **caractérisé en ce que** le type de réglage est ajusté à la fois manuellement par un opérateur sur un champ de commande (36) et automatiquement en fonction d'états de fonctionnement du dispositif de levage, du bras oscillant supérieur ou du tracteur.

2. Procédé selon la revendication 1, dans lequel le bras oscillant supérieur (12) est un cylindre hydraulique pour le réglage de la longueur du bras oscillant supérieur.

3. Procédé selon la revendication 1 ou 2, dans lequel on utilise en tant que valeur de référence pour la longueur du bras oscillant supérieur une longueur de bras oscillant supérieur ajustée en dernier manuellement, qui est associée à une position de travail prédéterminée du dispositif de levage.

4. Procédé selon la revendication 3, dans lequel la longueur de référence est ajustée lorsque le dispositif de levage (2) se trouve dans la position de réglage.

5. Procédé selon l'une quelconque des revendications précédentes, dans lequel des caractéristiques du réglage de pression ou de longueur du bras oscillant supérieur (12) peuvent être réglées manuellement par un opérateur.

6. Procédé selon l'une quelconque des revendications précédentes, dans lequel le réglage de longueur ou de pression du bras oscillant supérieur (12) est seulement activé lors d'un réglage du dispositif de levage.

7. Procédé selon l'une quelconque des revendications précédentes, dans lequel, pendant le réglage de pression, seul un réglage de la longueur du bras oscillant supérieur à l'intérieur d'une plage prédéterminée est autorisé.

8. Procédé selon l'une quelconque des revendications précédentes, dans lequel une commutation d'un réglage de longueur à un réglage de pression du bras oscillant supérieur (12) est effectuée automatiquement lorsque celui-ci a atteint sa longueur de référence et que le dispositif de levage (2) a atteint sa position de travail de dispositif de levage ou sa position de réglage.

9. Procédé selon l'une quelconque des revendications précédentes, dans lequel lors de l'ajustement du réglage de pression, le réglage de longueur du bras oscillant supérieur (12) est activé et la longueur de référence du bras oscillant supérieur (12) est d'abord ajustée dans la position de travail du dispositif de levage.

10. Procédé selon l'une quelconque des revendications précédentes, dans lequel, lors d'une interruption ou d'un verrouillage du réglage du dispositif de levage, aucune modification de la longueur du bras oscillant supérieur n'est effectuée.

11. Procédé selon l'une quelconque des revendications précédentes, dans lequel lors d'un dépassement d'une vitesse de conduite limite, le réglage de pression est coupé et doit être à nouveau activé manuellement par l'opérateur.

12. Procédé selon l'une quelconque des revendications précédentes, dans lequel lors d'un actionnement extérieur du réglage du dispositif de levage, le réglage du bras oscillant supérieur est coupé.

13. Procédé selon l'une quelconque des revendications précédentes, dans lequel, au cas où un actionnement extérieur du réglage du dispositif de levage a lieu dans une position de transport du dispositif de levage (2), le bras oscillant supérieur (12) est réglé à sa longueur de référence.

14. Procédé selon la revendication 13, dans lequel, une fois la longueur de référence atteinte, la longueur du bras oscillant supérieur peut seulement être réglée après un déverrouillage manuel du réglage du dispositif de levage.

15. Procédé selon l'une quelconque des revendications 2 à 14, dans lequel lors d'un réglage de la pression de dérivation, le réglage de pression s'effectue de manière intermittente et le bras oscillant supérieur hydraulique (12) est arrêté pendant les cycles de réglage de pression pour mesurer la pression.

16. Procédé selon la revendication 15, comprenant les étapes suivantes :
- détection de la pression dans des espaces de pression (38, 40) du bras oscillant supérieur (12) lorsque le bras oscillant supérieur (12) est fixe ;
- calcul d'une longueur de consigne du bras oscillant supérieur en fonction de la direction de la charge ainsi que de la pression réelle détectée, la pression de consigne souhaitée devant être ajustée pour cette longueur de bras oscillant supérieur de consigne ;
- arrêt du bras oscillant supérieur (12) ;
- mesure de la pression dans les espaces de pression (38, 40) du bras oscillant supérieur (12) et
- calcul d'une nouvelle longueur de consigne de bras oscillant supérieur en fonction de la pression réelle à présent mesurée et de la longueur de consigne ancienne calculée préalablement du bras oscillant supérieur et
- répétition du cycle jusqu'à ce que la pression de consigne au niveau du bras oscillant supérieur (12) soit atteinte.

17. Procédé selon l'une quelconque des revendications précédentes, dans lequel lors d'un actionnement simultané de touches externes (28, 86, 87), le réglage du bras oscillant supérieur est interrompu.

18. Dispositif de levage d'un engin de travail mobile comprenant un agencement de bras oscillant inférieur (30) pouvant être réglé par le biais d'un réglage de dispositif de levage électrohydraulique et comprenant au moins un bras oscillant supérieur (12) pouvant être réglé par le biais d'un circuit de réglage de bras oscillant supérieur, le circuit de réglage de bras oscillant supérieur étant réalisé de telle sorte qu'un réglage de longueur ou de pression puisse être effectué au niveau du bras oscillant supérieur (12),
**caractérisé par** un champ de commandes qui présente des éléments de commande (88, 90) pour activer et ajuster des caractéristiques d'un réglage de bande et/ou de pression et des éléments de commande (86, 87) pour le réglage manuel de la longueur du bras oscillant supérieur.
